# EUROPÄISCHE PATENTSCHRIFT

(11) **EP 0 878 137 B1**
(45) Veröffentlichungstag und Bekanntmachung des Hinweises auf die Patenterteilung: **25.07.2001**
(21) Anmeldenummer: 98106211.0
(22) Anmeldetag: 04.04.1998
(51) Int. Cl.: A23L 3/36, A23G 7/02

(54) **Verfahren zum Kühlen von überzogenen Nahrungsmitteln, insbesondere Süss- und Backwaren**
Method for cooling coated food products, especially confectionary and bakery products
Procédé pour le refroidissement des produits alimentaires enrobés, en particulier des produits de boulangerie et confiserie

(30) Priorität: 06.05.1997 DE 19724639
(43) Veröffentlichungstag der Anmeldung: 18.11.1998
(73) Patentinhaber: Hosokawa Kreuter GmbH, 22419 Hamburg (DE)
(72) Erfinder: Koch, Peter, 25431 Pinneberg (DE); de Koomen, Joost J., Mechanicsburg P.A. (US)
(74) Vertreter: von Raffay, Vincenz, Dipl.-Ing.

(56) Entgegenhaltungen:
- EP-A- 0 667 503
- DE-A- 2 322 918
- DE-A- 4 311 589
- US-A- 4 142 376
- US-A- 4 276 753
- US-A- 5 102 040
- US-A- 5 544 697

## Beschreibung

Die Erfindung betrifft ein Verfahren nach dem Oberbegriff des Anspruches 1 oder 2.

Ein Verfahren nach dem Oberbegriff des Anspruches 1 ist grundsätzlich aus der DE-A1-43 11 589 bekannt. Bei diesem bekannten Verfahren wird Luft als Kühlmittel eingesetzt. Man spricht dann von sog. Konvektionskühlung und/oder Strahlungskühlung. Es ist auch bekannt, die Kühlung mit Hilfe von Bodenplatten durchzuführen, die unterhalb des Transportbandes angeordnet sind und von einem flüssigen Kühlmittel, vorzugsweise Wasser, durchströmt werden. In diesem Falle spricht man von Kontakt- oder Strahlungskühlung. Auch ist eine Kombination aus beiden Kühlarten bekannt, d.h. die Kühlung erfolgt auf der Oberseite durch eine Konvektionskühlung mit Luft und auf der Unterseite durch eine Kontaktkühlung mit Hilfe von Bodenplatten. Die Kühlung erfolgt im Gleich- oder Gegenstromverfahren. Beim Gleichstromverfahren sind Transportrichtung und Strömungsrichtung des Kühlmittels gleich. Beim Gegenstromverfahren sind sie entgegengesetzt. Das Gegenstromverfahren hat den Vorteil, daß die Differenz zwischen der Temperatur des Kühlmittels und der Temperatur der zu kühlenden Produkte geringer ist. Die Bodenplatten werden bei bekannten Vorrichtungen von dem Kühlmittel normalerweise parallel durchströmt. Das erfindungsgemäße Verfahren wird eingesetzt bei der Produktion der unterschiedlichsten Nahrungsmittel wie Riegel, Pralinen, Waffeln, Zuckerwaren, Dauer- und Feinbackwaren, die ganz oder teilweise überzogen werden. Bei den Überzügen handelt es sich um dicke oder dünne Benetzungen, insbesondere aus Schokolade, Karamel, Kakao-, Fett- und Zuckerglasuren. In dem Kühlkanal werden die Überzüge abgekühlt, damit sie erstarren. In dem Kühlkanal können sich auch andere Einrichtungen für das Einstellen und Regeln der Feuchte und weiterer Parameter befinden.

Bei der Abkühlung und Erstarrung der Überzüge handelt es sich um einen Prozeß, der grundsätzlich nach den Regeln der Wärmelehre frei bemessen werden kann. Da Gefüge, Glanz und Härte des Überzuges, beispielsweise bei Schokolade, bestimmten Qualitätsansprüchen genügen müssen, ist die Auslegung des Abkühlganges bezüglich der Temperatur und Geschwindigkeit des Kühlmittels nach einschlägiger Erfahrung limitiert, damit beispielsweise die polymorphe Kakaobutter in der Schokolade in einer günstigen Struktur kristallisiert. Man spricht von schonender Kühlung.

Wenn in einer Produktionsanlage über einen längeren Zeitraum gleiche Produkte hergestellt und gekühlt werden, ist es für einen Fachmann möglich, die richtigen Produktionsparameter einzustellen. Wenn beispielsweise im Gegenstromverfahren gearbeitet wird, tritt das Kühlmittel mit einer bestimmten Temperatur ein und, bedingt durch die Erwärmung durch die Produkte, mit einer höheren Temperatur aus. Diese Temperaturdifferenz wird normalerweise während eines Produktionsvorganges konstant gehalten, um für eine gleichbleibende Qualität zu sorgen. Die entsprechenden Parameter und damit die gewünschten Kühlkurven lassen sich also erst nach einer bestimmten Produktionszeit einstellen und festhalten, insbesondere erst dann, wenn die Produkte das Ende des Kühlkanals erreicht haben. Nach Produktionsstart, -stop und -unterbrechung treten aber Probleme auf, da die Kühlmitteltemperatur am Kühlmittelaustritt, d.h. beim Gegenstromverfahren, beim Produkteintritt zu niedrig ist. Bei Produktionsstart befinden sich keine Produkte im Kühlkanal, so daß auch keine Wärme abtransportiert wird. Die Kühlmitteltemperatur ist dann zu niedrig und neue, eintretende Produkte werden zu stark gekühlt. Dieses hat einen negativen Einfluß und führt normalerweise dazu, daß Ausschuß entsteht. Entsprechendes gilt bei Produktionsunterbrechung.

Der Erfindung liegt nun die Aufgabe zugrunde, ein Verfahren der eingangs genannten Art zu schaffen, durch das auch nach Produktionsbeginn oder nach Wiederaufnahme der Produktion bei einer Unterbrechung, ein Produkt von vornherein mit der erwünschten Qualität erzeugt wird.

Diese Aufgabe wird, je nach Auslegung des Verfahrens, durch das Kennzeichen des Anspruches 1 oder 2 bzw. bei einer Kombination der beiden Verfahren nach Anspruch 3 gelöst.

Erfindungsgemäß wird also zuerst ein delta-T, d.h. eine Differenz zwischen Kühlmittelaustritt und Kühlmitteleintritt ermittelt, durch die die Herstellung eines Produktes mit der gewünschten Qualität sichergestellt ist. Die Einstellung dieses delta-T-Wertes erfolgt durch Regeln der Kühlmittelströmungsgeschwindigkeit. Je geringer die Kühlmittelströmungsgeschwindigkeit, desto größer das delta-T. Wenn dieser Wert festliegt, wird er als Sollwert für diese Produktion in einen Rechner eingegeben, so daß er für die weitere Kühlung dieses Produktes feststeht. Wenn dann Produktionsunterbrechungen stattfinden, wird die Kühlmitteleintrittstemperatur geregelt, und zwar derart, daß der Istwert am Kühlmittelaustritt festgestellt und der Sollwert entsprechend um diesen Istwert verändert wird. Bei einem Neustart der Produktion bedeutet dieses, daß die Temperatur des Kühlmittelaustritts anfänglich niedriger ist, da nicht eine entsprechende Wärmemenge durch die Produkte auf dem Wege vom Eintritt zum Austritt übertragen wird. Um die Differenz zwischen dem delta-T-Sollwert und dem delta-T-Istwert am Kühlmittelaustritt wird dann die Temperatur am Kühlmitteleintritt angehoben, damit die richtige Kühlmittelaustrittstemperatur beim Einlaufen der Produkte im Gegenstromverfahren in den Kühlkanal eingestellt wird. Bei fortschreitender Produktion findet eine Nachregelung auf die ursprünglich eingestellten Parameter statt. Es erfolgt erfindungsgemäß also eine automatische Kompensation der Kühlmitteltemperaturen.

Im folgenden wird die Erfindung unter Hinweis auf die Zeichnung anhand eines Ausführungsbeispieles näher erläutert.

Es zeigt:
- Fig. 1: eine schematische Seitenansicht eines Kühlkanales zur Durchführung des erfindungsgemäßen Verfahrens;
- Fig. 2: ein Diagramm der Kühlkurven für eine Luftkühlung;
- Fig. 3: ein der Fig. 2 entsprechendes Diagramm der Kühlkurven für Flüssigkeitskühlung; und
- Fig. 4: ein Diagramm der Überzugstemperatur.

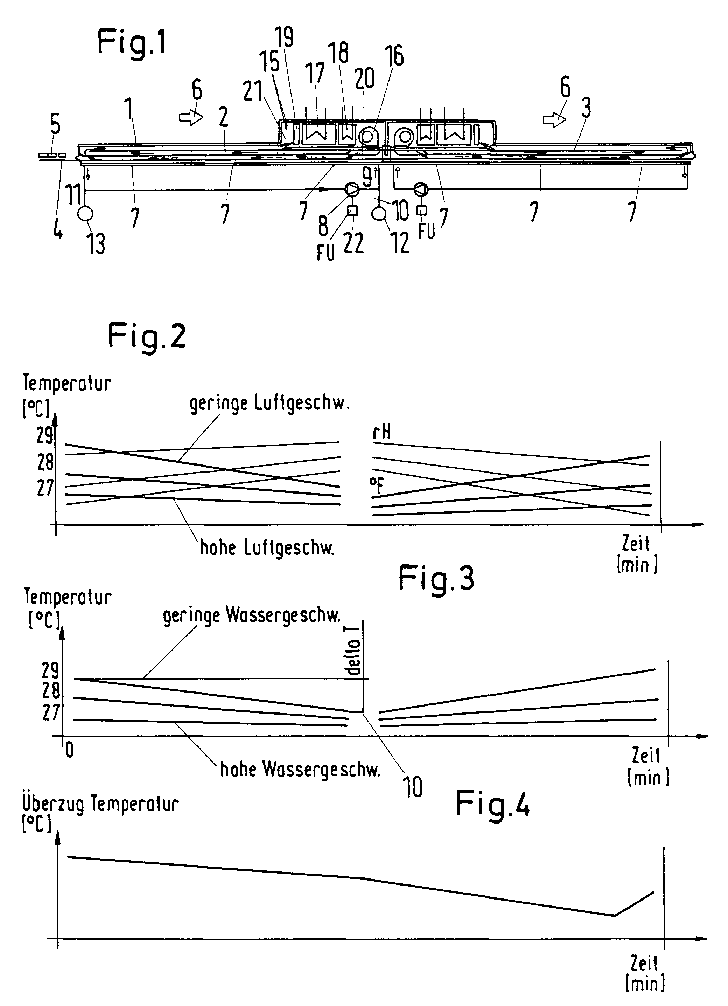

Der in Fig. 1 dargestellte Kühlkanal 1 besteht aus zwei Kühlzonen 2 und 3. Das Transportband 4 transportiert die überzogenen Produkte 5 in Richtung des Pfeiles 6. Die Zonen 2 und 3 weisen jeweils drei Bodenplatten 7 für die Kontaktkühlung von unten auf. Die Bodenplatten jeweils einer Kühlzone sind in Reihe miteinander verbunden. Es können selbstverständlich auch mehr oder weniger Bodenplatten vorhanden sein. Grundsätzlich ist auch eine Kombination aus Bodenplatten, die in Reihe oder parallel miteinander verbunden sind, möglich. Grundsätzlich ist aber eine Anordnung in Reihe erforderlich, um das erfindungsgemäße Verfahren durchzuführen. Parallelschaltungen sind lediglich als Zwischenstufen möglich.

Durch die Bodenplatten fördert eine Pumpe 8 Wasser als Kühlmittel in Richtung des Pfeiles 6. Ein Frequenzumformer ist mit 22 bezeichnet. Bei 10 und 11 werden die Temperaturen von Temperaturfühlern vom Vorlauf und Rücklauf des Kühlmittels aufgenommen. Die Kühlmitteltemperaturen werden zur Regelung an einen Rechner gegeben, der im Schaltschrank oder im Bedienpult der Vorrichtung eingebaut ist. Das Transportband durchläuft im weiteren Verlauf die Kühlzone 3. Die Kühlung im Boden von Zone 3 wird wie in Zone 2 geregelt. Die Kühlzone 2 ist im Gegenstrom ausgeführt, wohingegen die Kühlzone 3 als Gleichstromkühlung abläuft.

Das durch die Bodenplatten gepumpte Kühlmittel wird mit Hilfe der delta-T-Regelung und automatischer Kompensation in einem definierten Temperaturbereich gehalten.

Die Konvektionskühlung erfolgt mit Hilfe von Luft 15, die von einem Gebläse 16 durch den Filter 19 und einen Wärmetauscher 17 zum Kühlen gesaugt wird. Ein Wärmetauscher zum Heizen ist mit 18 bezeichnet. Die Vor- und Rücklauftemperaturen der Kühlluft werden bei 20 und 21 durch Temperaturfühler aufgenommen. Die aufgenommenen Temperaturen werden in den programmierten Rechner eingegeben.

Im folgenden werden als Beispiel Zahlenwerte für die Oberflächen- und Bodenkühlung einmal ohne Kompensation und einmal mit automatischer Kompensation für die Bodenkühlung mit Wasser als Kühlmittel und für die Oberflächenkühlung mit Luft wiedergegeben.

### Bodenkühlung

Die Produktkühlung am Boden kann in beiden Zonen separat beeinflußt werden. Alle Anlagenparameter werden entsprechend der bestimmten Produktion eingestellt und festgelegt. Nur die erforderliche Kühlwassermenge wird mit den Stetigventilen durch den Regler mit einer entsprechend programmierten Steuerung gesteuert.

Mit der Temperatureinstellung von Wasservorlauf der Bodenplatten kann die Vorlauftemperatur zwischen 12,7° und 21,1°C (55° und 70°F) eingestellt werden. Die Bodentemperatur sollte bis maximal 3K (5°F) unter der Lufttemperatur eingestellt werden, um eine Kondenswasserbildung auf den Bodenplatten zu vermeiden.

Die Wassermenge kann über die Wasserpumpen zwischen 0 und 100% voreingestellt werden. Das entstehende delta-T bildet eine entsprechende Kühlkurve.

Mit der delta-T-Kompensation, die Temperaturen vom Vorlauf und Rücklauf der Bodenplatten werden gemessen und verglichen, bei normaler Produktion entsteht eine Temperaturdifferenz. Diese Temperaturdifferenz bildet den delta-T-Sollwert. Er richtet sich nach der eingestellten Wassermenge und wird bei der ersten Produktion festgelegt. Wird bei Produktionsstart und/oder Unterbrechungen der delta-T-Sollwert unterschritten, ändert sich der Sollwert vom Wasservorlauf der Bodenplatten um den entsprechenden Wert. Mit dieser Steuerung wird bei Produktionsunterbrechungen eine zu starke Kühlung der ersten Produktreihen vermieden.

### Einstellbeispiele:

Ohne Kompensation können die ersten Produktreihen zu kalt werden.

| | | |
|---|---|---|
| Sollwert Wasser | Vorlauf | =15,5°C (60,0°F) |
| | Istwert | =15,5°C (60,0°F) |
| Sollwert Wasser | Rücklauf | =20,5°C (69,0°F) |
| | Istwert | =18,6°C (65,5°F) |
| delta-T | Istwert | = 3,1°C ( 5,5°F) |

| Mit automatischer Kompensation | | |
|---|---|---|
| Sollwert Wasser | Vorlauf | =15,5°C+delta-T diff 2K |
| | | (60,0°F+delta-T diff 3,5°F) |
| | Istwert | =17,5°C (63,5°F) |
| Sollwert Wasser | Rücklauf | =20,5°C (69,0°F) |
| | Istwert | =20,5°C (69,0°F) |
| Sollwert delta-T | | =5,0K (9,0°F) |
| | Istwert | =3,0K (5,5°F) |

### Oberflächenkühlung

Die Produktkühlung der Oberflächen kann in beiden Zonen separat durch folgende Einstellungen vorgenommen werden: Alle Anlagenparameter werden entsprechend der Produktion eingestellt und festgelegt. Nur die erforderliche Kühlwassermenge wird mit den Stetigventilen durch den Regler mit programmierbarer Steuerung gesteuert.

Ob mit Strahlungs- und/oder Konvektionskühlung gefahren wird, kann grundsätzlich mechanisch über eine Klappe an der Verdampfereinheit eingestellt werden. Die Konvektionskühlung kann zwischen 0 und 100% eingestellt werden.

Mit der Lufteintrittstemperatur, der Lufttemperatureinstellung nach den Gebläsen zwischen 12,7° bis 21,1°C (55° bis 70°F) und der eingestellten Luftgeschwindigkeit zwischen 0 und 100% bildet das entstehende delta-T eine entsprechende Kühlkurve.

Durch die Einstellung der Luftheizung wird die relative Luftfeuchtigkeit der Kühlluft eingestellt. Die resultierende relative Feuchte ist stark abhängig von der Luftgeschwindigkeit und der Lufttemperatur und wird aus diesen Gründen nicht gemessen und angezeigt.

Mit der delta-T-Kompensation werden die Lufttemperaturen vor dem Wärmetauscher und hinter den Gebläsen gemessen und verglichen. Bei normaler Produktion entsteht eine Temperaturdifferenz. Der delta-T-Sollwert richtet sich nach der eingestellten Luftgeschwindigkeit und sollte erst bei Produktion festgelegt werden. Wird bei Produktionsstart und/oder Unterbrechungen der delta-T-Sollwert unterschritten, ändert sich der Sollwert der Lufteintrittstemperatur um den entsprechenden Wert.

### Einstellbeispiele:

Ohne Kompensation können die ersten Produktreihen zu kalt werden.

| | | |
|---|---|---|
| Sollwert Luft nach den | Gebläsen | =17,2°C (63,0°F) |
| | Istwert | =17,2°C (63,0°F) |
| Sollwert Luft vor | Wärmetauscher | =21,1°C (70,0°F) |
| | Istwert | =19,7°C (67,5°F) |
| delta-T | Istwert | = 2,5K ( 4,5°F) |

| Mit automatischer Kompensation | | |
|---|---|---|
| Sollwert Luft nach den | Gebläsen | =17,2°C+delta-T diff 1,4K |
| | | (63,0°F+delta-T diff 2,5°F) |
| | Istwert | =18,6°C (65,5°F) |
| Sollwert Luft vor | Wärmetauscher | =21,1°C (70,0°F) |
| | Istwert | =21,1°C (70,0°F) |
| Sollwert delta-T | | = 3,9K (7,0°F) |
| | Istwert | = 2,5K ( 4,5°F) |

Die durch die Konvektion oder Strahlung erwärmte Kühlluft wird mit Hilfe der delta-T-Steuerung und automatischer Kompensation in einem definierten Temperaturbereich gehalten.

In den Fig. 2 bis 4 sind Betriebsarten des Kühlkanals für Bodenkühlung (Fig. 3) und Oberkühlung durch Luft (Fig. 2) gezeigt. Der Verlauf der Überzugstemperatur (Fig. 4) ist in Abhängigkeit von den oben genannten Betriebsarten schematisch dargestellt.

Im Diagramm nach Fig. 3 für die Bodenkühlung steht die Kurve 29 für geringe Wassergeschwindigkeiten, die Kurve 28 für mittlere und die Kurve 27 für hohe Wassergeschwindigkeiten. Entsprechendes gilt für die Luftgeschwindigkeiten in dem Diagramm nach Fig. 2.

Das delta-T der Kühlmedien ist um so höher, je geringer die Strömungsgeschwindigkeiten der Kühlmedien sind.

Das Diagramm nach Fig. 4 der Überzugstemperatur ist aus den Diagrammen nach Fig. 2 und 3 abgeleitet und zeigt einen möglichen Verlauf für die Abkühlung des Überzugs.

## Patentansprüche

1. Verfahren zum Kühlen von überzogenen Nahrungsmitteln, insbesondere Süß- und Backwaren, die durch ein Transportband durch einen Kühlkanal bewegt werden, mit Luft als Kühlmittel, gekennzeichnet durch folgende Verfahrensschritte:
a) Einstellen eines delta-T (Istwert) zwischen Kühlmittelaustritt und -eintritt für das bestimmte, zu überziehende Produkt durch Regeln der Kühlmittelströmungsgeschwindigkeit;
b) Eingeben dieses delta-T als Sollwert in einen Rechner als Parameter für die weitere Kühlung, dieses Produktes;
c) Regeln der Kühlmitteleintrittstemperatur, insbesondere bei Produktionsunterbrechung oder -neustart, durch die im Rechner ermittelte Differenz zwischen dem als Sollwert festgelegten delta-T und dem tatsächlich am Kühlmittelaustritt gemessenen Istwert durch entsprechende Veränderung des Sollwertes um diesen Istwert.

2. Verfahren zum Kühlen von überzogenen Nahrungsmitteln, insbesondere Süß- und Backwaren, die durch ein Transportband durch einen Kühlkanal über Bodenplatten als von einem flüssigen Kühlmittel durchströmten Wärmetauschern, bewegt werden, gekennzeichnet durch folgende Verfahrensschritte:
a) Einstellen eines delta-T (Istwert) zwischen Kühlmittelaustritt und -eintritt für das bestimmte, zu überziehende Produkt durch Regeln der Kühlmittelströmungsgeschwindigkeit;
b) Eingeben dieses delta-T als Sollwert in einen Rechner als Parameter für die weitere Kühlung, dieses Produktes;
c) Regeln der Kühlmitteleintrittstemperatur, insbesondere bei Produktionsunterbrechung oder -neustart, durch die im Rechner ermittelte Differenz zwischen dem als Sollwert festgelegten delta-T und dem tatsächlich am Kühlmittelaustritt gemessenen Istwert durch entsprechende Veränderung des Sollwertes um diesen Istwert.

3. Verfahren nach Anspruch 1 und 2, bei dem die Kühlung sowohl durch Luft als auch durch ein flüssiges Kühlmittel erfolgt, dadurch gekennzeichnet, daß die delta-T-Regelung für beide Kühlmittel vorgenommen wird.

4. Verfahren nach Anspruch 2 oder 3, dadurch gekennzeichnet, daß die Bodenplatten in Bewegungsrichtung des Transportbandes in Reihe geschaltet werden, so daß sie nacheinander von dem flüssigen Kühlmittel durchströmt werden.

## Claims

1. Method for cooling coated foods, particularly pastries and confectionery, which are moved by a conveyor belt through a cooling channel, with air as the coolant, characterized by the following method steps:
a) setting a delta-T (actual value) between the coolant exit and entrance for the specific product to be coated by regulating the coolant flow rate;
b) inputting said delta-T as a desired value into a computer as a parameter for the further cooling of said product;
c) regulating the coolant entrance temperature, particularly in the case of a production interruption or restart, by the difference determined in the computer between the delta-T fixed as the desired value and the actual value measured at the coolant exit by a corresponding modification by said actual value to the desired value.

2. Method for cooling coated foods, particularly pastries and confectionery, which are moved by a conveyor belt through a cooling channel via base plates as heat exchangers through which flows a liquid coolant, characterized by the following method steps:
a) setting a delta-T (actual value) between the coolant exit and entrance for the specific product to be coated by regulating the coolant flow rate;
b) inputting said delta-T as a desired value into a computer as a parameter for the further cooling of said product;
c) regulating the coolant entrance temperature, particularly in the case of production interruption or restart, through the difference determined in the computer between the delta-T fixed as the desired value and the actual value measured at the coolant exit by corresponding modification by said actual value of the desired value.

3. Method according to claim 1 and 2, wherein the cooling takes place both by air and by a liquid coolant, characterized in that the delta-T regulation takes place for both coolants.

4. Method according to claim 2 or 3, characterized in that the base plates are connected in series in the movement direction of the conveyor belt, so that the liquid coolant flows through them successively.

## Revendications

1. Procédé pour refroidir des aliments enrobés, notamment des friandises et des pâtisseries, qui sont déplacés par une bande transporteuse à travers un canal de refroidissement, avec de l'air comme fluide de refroidissement, caractérisé par les étapes suivantes :
a) réglage d'un delta-T (valeur réelle) entre la sortie de fluide de refroidissement et l'entrée de fluide de refroidissement pour le produit déterminé à enrober grâce à un réglage de la vitesse d'écoulement de fluide de refroidissement ;
b) entrée de ce delta-T comme valeur de consigne dans un ordinateur comme paramètre pour la suite du refroidissement de ce produit ;
c) réglage de la température d'entrée de fluide de refroidissement, notamment lors d'une interruption de la production ou lors d'un nouveau démarrage de la production, par la différence déterminée dans l'ordinateur entre le delta-T fixé comme valeur de consigne et la valeur réelle effectivement mesurée à la sortie de fluide de refroidissement, grâce à une modification correspondante de la valeur de consigne selon cette valeur réelle.

2. Procédé pour refroidir des aliments enrobés, notamment des friandises et des pâtisseries, qui sont déplacés par une bande transporteuse à travers un canal de refroidissement au-dessus de plaques de fond comme échangeurs de chaleur traversés par un fluide de refroidissement liquide, caractérisé par les étapes suivantes :
a) réglage d'un delta-T (valeur réelle) entre la sortie de fluide de refroidissement et l'entrée de fluide de refroidissement pour le produit déterminé à enrober grâce à un réglage de la vitesse d'écoulement de fluide de refroidissement ;
b) entrée de ce delta-T comme valeur de consigne dans un ordinateur comme paramètre pour la suite du refroidissement de ce produit ;
c) réglage de la température d'entrée de fluide de refroidissement, notamment lors d'une interruption de la production ou lors d'un nouveau démarrage de la production, par la différence déterminée dans l'ordinateur entre le delta-T fixé comme valeur de consigne et la valeur réelle effectivement mesurée à la sortie de fluide de refroidissement, grâce à une modification correspondante de la valeur de consigne selon cette valeur réelle.

3. Procédé selon les revendications 1 et 2, dans lequel le refroidissement s'effectue aussi bien par de l'air que par un fluide de refroidissement liquide, caractérisé en ce qu'on effectue le réglage de delta-T pour les deux fluides de refroidissement.

4. Procédé selon les revendications 2 ou 3, caractérisé en ce que les plaques de fond sont branchées en série dans le sens de déplacement de la bande transporteuse de telle sorte qu'elles sont traversées les unes après les autres par le fluide de refroidissement liquide.
